# EUROPEAN PATENT APPLICATION

(11) **EP 1 618 943 A1**
(43) Date of publication of application: **25.01.2006**
(21) Application number: 05076558.5
(22) Date of filing: 08.07.2005
(51) Int. Cl.: B01D 46/46, B01D 46/04

(54) **Valve control system for dust collector units**

(30) Priority: 20.07.2004 EP 04425536
(71) Applicant: Esa Electronic Engineering S.r.L., 20010 Mesero (MI) (IT)
(72) Inventor: Bellinelli, Gianfranco, 20010 Mesero (MI) (IT)
(74) Representative: Riccardi, Sergio

(57) **Abstract**

A valve control system used in dust collector units to perform the cleaning of their filtering elements (7), comprising an electronic control unit (17) for managing the cleaning cycle, a plurality of solenoid valves (13) for blowing compressed air on said filtering elements (7) and at least a remote control module (15) coupled with each solenoid blow valve (13) which manages its activation. The remote control module (15) are operated by the electronic control unit (17). Each of the remote control modules (15) is provided as a stand alone and interchangeable unit, and it comprises at least a connector module (31), which consists of a socket connectable to a flexible connection cable (29), and at least a management module (33), connected to the connector module (31) and provided with electronic circuits for managing the activation and the functioning of the solenoid blow valves (13). The flexible connection cables (29) form a single field bus to connect in series and in a modular way all the single identical and mutually interchangeable remote control modules (15).

## Description

The present invention is about a valve control system used in dust collector units to perform their recurrent cleaning.

Frequently, technological processes and industrial workings can originate dusts which, if not eliminated, can cause environmental pollution and health injuries to the persons working in the same environment.

To solve this problem, air purification plants are installed, consisting of filtering systems which keep these dusts. Such plants, also called dust collector units, keep the particles on the outer surfaces of proper filtering elements, disposed in rows and columns inside a box, avoiding that said particles can be directly sent to the external environment.

To maintain efficient the filtering system, the filtering elements, consisting of suction hoses or cartridges, have to be cleaned in a proper way. The removal of the kept dust is normally performed by sequentially activating a series of solenoid valves, which blow compressed air in countercurrent inside the filtering elements, bringing down the dusts settled on their outer surfaces on the filter's bottom, for a subsequent removal.

In traditional valve control systems, proper electronic control units are usually employed, providing for managing the cleaning cycle. In such systems, solenoid valves are sequentially controlled.

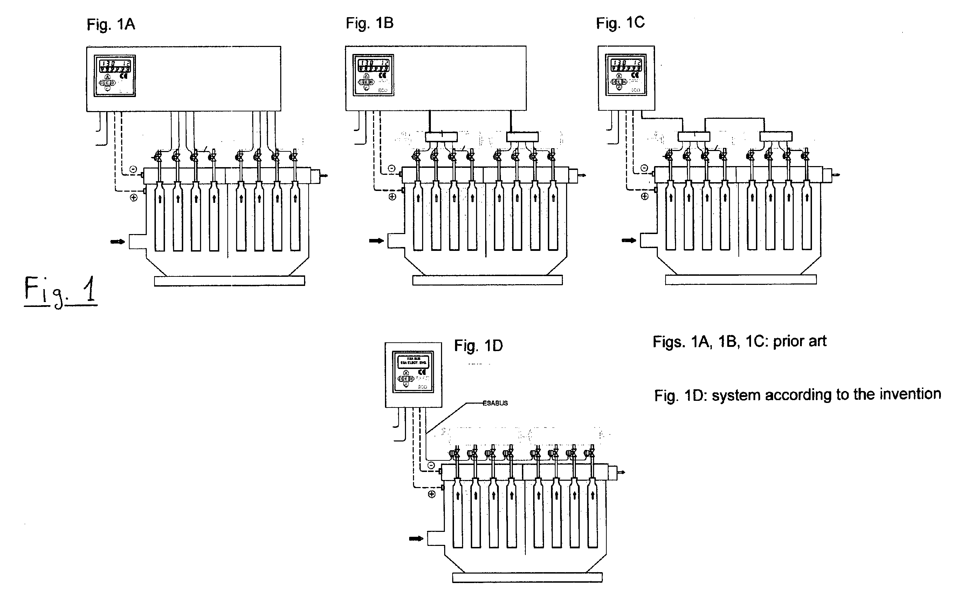

Each solenoid valve is connected to the electronic control device in an independent way. Consequently, accordingly to the number of solenoid valves to be controlled, the electronic control unit will have the same number of piloting outputs and connecting cables between the same electronic control unit and each of said solenoid valves, making the whole system more complex and difficult to operate and to maintain. Examples of such prior art systems are shown in Figure 1.

Therefore, systems providing for a single bus to connect the electronic control device with the solenoid valves have been developed, eliminating the great part of the cables present in the plant and consequently reducing the manufacture and installation costs. A system of this type is described in the international patent application published with No. WO 96/34675, of "Goyen Controls Co. Pty. Limited", and it is shown in Figure 1 of the annexed drawings.

However, the solenoid valve control systems provided with a single field bus have the disadvantage to require that the dust collector unit has a rigidly fixed number of solenoid valves and related remote control modules, said number being set in the plant installation phase, thus not allowing any subsequent modification by the user, unless the operation is performed by specialized personnel. Such control systems further require addressing signals for the remote control modules of the solenoid valves, said addressing signals being generated and sent by the electronic control unit. Furthermore, in known systems, the remote control modules usually generate response signals to the control pulses sent by the main control unit, said response signals of each remote control module being required for the activation of the subsequent remote module by a further pulse generated by the control unit. Therefore, one can see that the remote module addressing and the need to send an activation pulse for each solenoid valve in response to return signals from said solenoid valves make more complicated, as well as expensive, the system concerning the electronic equipments.

It is thus object of the present invention to provide for a valve control system for dust collector units which is more simplified, economic but especially versatile with respect to the control systems of the prior art, although being as much efficient in its operation.

The solenoid valve control system according to the invention is particularly versatile, since all the remote control modules of the solenoid valves, in cascade connection, are identical and mutually interchangeable, being thus possible to obtain a modular plant, which can be adapted to the specific use requirements and which can be easily installed in a very short time by the final user too.

Furthermore, the remote control modules of the solenoid valves of the system according to the invention are connected in cascade and they operate according the so called "domino effect": all the solenoid valves of the plant are activated through a pulse sent by the main control unit, without requiring to address the remote control modules of said solenoid valves.

Characteristics, objects and advantages of the present invention will be better highlighted in the following description, with reference to the annexed drawings, related to a preferred but not limiting embodiment of the same invention. Obviously, the same reference numbers in the different figures show the same or equivalent components.

Figure 1 shows some valve control systems for dust collector units belonging to the prior art in comparison with the system of the invention.

Figure 2 shows a dust collector unit provided with the valve control system according to the present invention.

Figure 3 shows a detail of the valve control system of the unit shown in Figure 2.

Figure 4 shows the wiring diagram of the valve control system of the unit shown in Figure 2.

Figure 5 is a detail of the valve control modules wiring diagram of the unit shown in Figure 2.

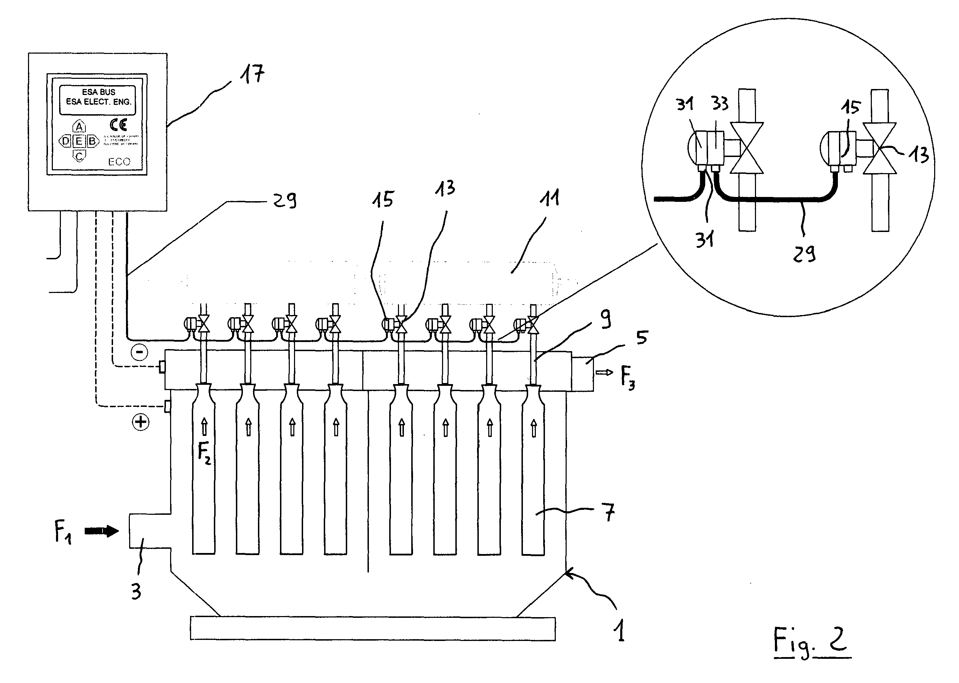

With reference to Figure 2 of the above mentioned drawings, a generic dust collector unit is indicated with numeral 1, consisting of a large box provided with at least an inlet hole 3 for the air to be filtered, at least an outlet hole 5 for the filtered air and a plurality of filtering elements 7, connected by means of conduits 9 to one or more tanks 11 containing compressed air for the recurrent cleaning of said filtering elements 7.

Each of the conduits 9 is provided with at least a solenoid blow valve 13 able, when operated, to transfer compressed air from each tank 11 to the different filtering elements 7 of the dust collector unit 1, in order to bring down the dust settled on the outer surfaces of said filtering elements 7 on the bottom of the unit's box 1, from where it will be properly neutralized and discharged. Each of the solenoid blow valves 13 is provided in its turn with a remote control module 15 which manages its activation, said remote control module 15 being operated by an electronic control unit 17.

Advantageously, each remote control module 15 is provided as a stand alone and interchangeable unit, consisting in a connector module 31 a, 31 b, or RES module, which consists of a socket connectable to a flexible cable 29, and a management module 33a, 33b, or RED module, connected to said RES module 31 a, 31 b and provided with electronic circuits for managing the activation and the functioning of the corresponding solenoid valve 13a, 13b. Each RED module 33a comprises a plug which is inserted in the corresponding solenoid valve 13a on one side, and a socket to which the RES module 31 b of the subsequent solenoid valve 13b is connected through the flexible cable 29 on the other side, thus obtaining a modular and customizable plant which preferably provides for a module number variable from 4 to 100 units.

Substantially, said RES 31 and RED 33 modules are disposed together in a reduced size housing box, made of plastic material, so that each remote control module 15 can be mass produced with reduced costs and can be added to the dust collector unit 1 by unskilled personnel too, due to the extreme simplicity of the connections to be performed, consisting in the simple insertion of a plug into a socket for each module 15.

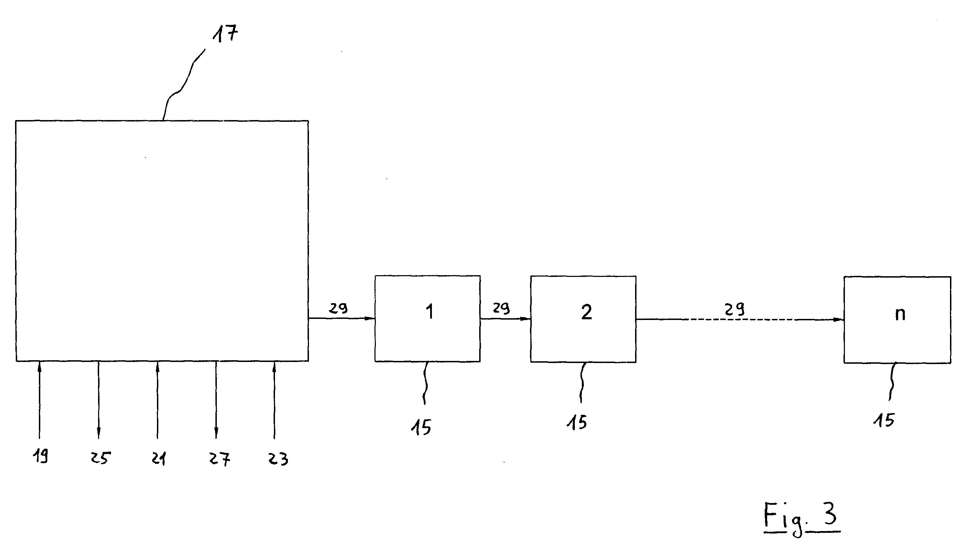

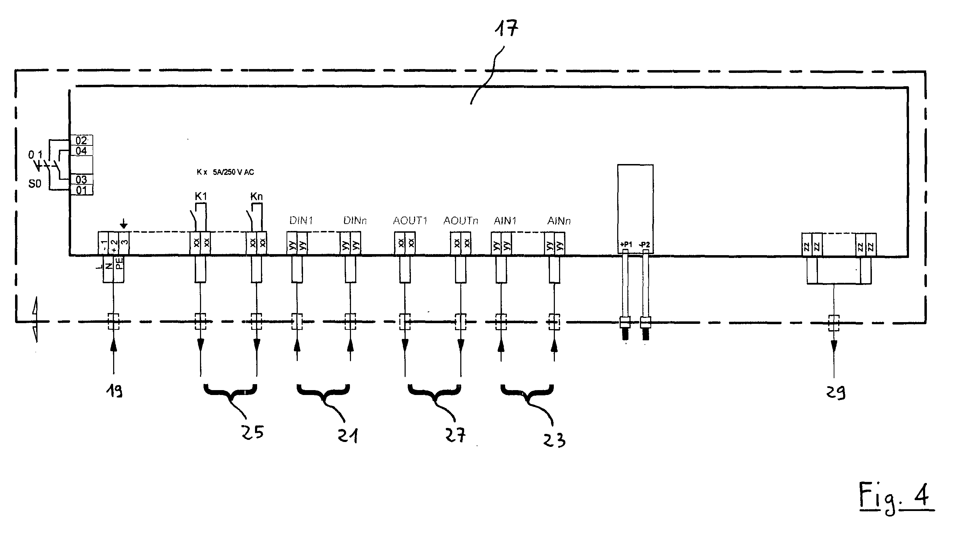

With combined reference to Figures 3 and 4 of the annexed drawings, the control unit 17 is provided with a feeding input 19, one or more digital 21 and analogue 23 inputs and one or more digital 25 and analogue 27 outputs. Inputs 19, 21 and outputs 25, 27 connected to the control unit 17 are of different nature, and they are codified with respect to their performed function.

Inputs 21, 23 usually serve to send remote commands by the end user for remote starting and stopping functions of the cleaning cycle, or for information like cleaning start in presence of compressed air, automatic or manual remote working and others. Outputs 25, 27 send information of different kind, which are given to the end user by the control unit 17, regarding the operative, defect or warning condition of the unit.

The connection between the control unit 17 and the remote control modules 15 of the solenoid blow valves 13 is thus obtained with a single field bus, through the flexible cables 29 which connect in series and in a modular way all the identical and mutually interchangeable single remote control modules 15, even subsequently to the manufacture of the whole plant, without requiring complex wiring harness operations to obtain the connection bus between the control unit 17 and the remote modules 15, which can also change in number according to the needs, without requiring any modification on the connection bus and on said control unit.

With initial reference to Figure 2, the working of the valve control system for dust collector units according to the present invention will be explained. During normal working of the dust collector unit, the air to be filtered is introduced in the inlet hole 3 of the unit 1, according to the direction indicated by the arrow F₁, then passing through the filtering elements 3 (in direction F₂), whose purpose is to keep the dusts. The air in this way cleaned will then exit from the unit 1 through the proper outlet hole 5, in direction F₃.

To provide for the recurrent cleaning of the filtering elements 3, the solenoid blow valves 13 are activated, thus allowing the passage of compressed air from the tanks 11 in the opposite direction with respect to the normal flow of the air to be filtered, in order to remove the dust kept by the filtering elements 3. The solenoid blow valves 13 activation for cleaning the filtering elements 3 takes place upon the generation of a control pulse by the control unit 17, which activates in sequence and in cascade, according to the so called "domino effect", all the remote modules 15 and consequently each single solenoid valve 13 associated therewith. The connection between the control unit 17 and the RES 31 and RED 33 modules of the remote control modules 15 is performed by the field bus carried out by the flexible cables 29 which, in addiction to feeding said remote control modules 15, also transmit the data determining both the activation time interval of each solenoid valve 13 and the pause interval before the activation of the subsequent solenoid valve, said intervals being easily settable on said control unit 17.

In addition, the control unit 17 can be provided with a differential pressure control system for the dust collector unit, by connecting said control unit 17 to a differential pressure transducer. In this case, the solenoid valves 13 activation and the subsequent cleaning cycle will be a function of the pressure difference detected by said differential pressure transducer. In case of clean filtering elements 7, i.e. with a ΔP (differential pressure) value below the predetermined threshold, the cleaning cycle will not start. After a working period without cleaning cycles, the filtering elements 7 tend to become obstructed and consequently the ΔP value rises. This ΔP increase involves a restarting of the filtering elements 7 cleaning cycle. Such a particular automatic working type allows to operate with constant ΔP values.

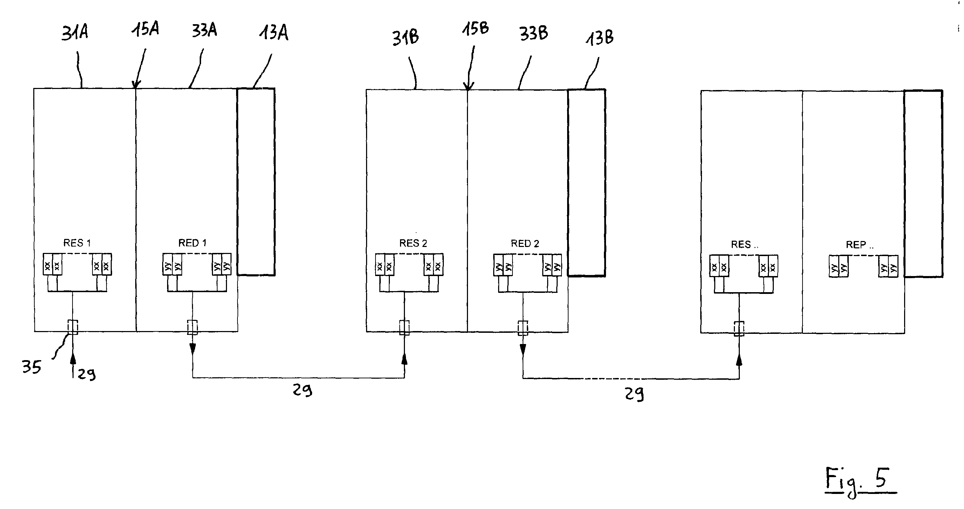

In practice, and with particular reference to Figure 5, the solenoid blow valves 13 activation for actuating the cleaning cycle takes place using the domino effect, without requiring to address the single remote control modules 15. Upon the generation of a pulse by the control unit 17, subsequently sent through the field bus to the first of the remote control modules 15a, the first solenoid valve 13a is activated, that is the solenoid valve directly connected to said control unit 17. At the second impulse, always sent through the connection cable 29, the subsequent solenoid valve 13b is then activated, and so on, until the last solenoid valve connected by said field bus 29 is activated, after which the cleaning cycle can restart from the beginning, if necessary.

In case of failures in the plant, i.e. one of the remote modules 15 and/or the solenoid valve 13 associated therewith is out of order, the flexible cables 29 which form the field bus of the system according to the invention are able to transmit anyway the pulses generated by the control unit 17 up to the last of the remote modules 15 connected in series. A control system of the failures related to a solenoid valve 13 or the associated remote module 15 can be provided as well on each of the remote modules 15, in order to send a proper return signal to the control unit 17. Furthermore, thanks to the fact that the single remote modules 15 are mutually interchangeable, it is possible to replace the broken down module by the user too, without requiring expensive maintenance interventions on the plant.

It is therefore evident that the valve control system for dust collector units according to the present invention fully achieves the intended objects, by the activation with the domino effect of all the valves of the unit, upon the generation of a pulse by the control unit and without addressing. The whole unit is of modular construction, since all the remote modules are identical and mutually interchangeable, and they are connected in cascade, and the system is as efficient in its working as the control system of the prior art, which have separate connections, dependent anyway from the control unit, for each valve or group of valves, but it is easier and more economic in its execution, which can be directly performed by the final user in a short time, connecting the different RES and RED modules to each other according to the needs, with a considerable money saving in terms of wiring harnesses.

Such valve control system for dust collector units can thus be applied in several industrial sectors, like iron and steel industry, wood and glass manufacture, cement works, incinerators and in all the sectors where dust generating workings are present, and a filter for eliminating said dusts from the environment is therefore requested.

It is evident that modifications, alterations, additions, variations and replacements could be resorted to the embodiment previously described in an illustrative way, without falling outside the scope of protection of the invention, as it is also defined in the appended claims.

## Claims

1. A valve control system used in dust collector units to perform the cleaning of their filtering elements (7), comprising an electronic control unit (17) for managing the cleaning cycle, a plurality of solenoid valves (13) for blowing compressed air on said filtering elements (7), at least a remote control module (15) coupled with each of said solenoid blow valves (13) which manages its activation, said remote control modules (15) being operated by said electronic control unit (17), **characterized in that** each of said remote control modules (15) is provided as a stand alone and interchangeable unit, and it comprises at least a connector module (31), which consists of a socket connectable to a flexible connection cable (29), and at least a management module (33), connected to said connector module (31) and provided with electronic circuits for managing the activation and the functioning of said solenoid blow valves (13), said flexible connection cables (29) forming a single field bus to connect in series and in a modular way all the single identical and mutually interchangeable remote control modules (15).

2. The valve control system according to claim 1, **characterized in that** each of said management modules (33) comprises a plug which is inserted in the corresponding solenoid blow valve (13) on one side, and a socket to which the connector module (31) of the subsequent solenoid blow valve (13) is connected through said flexible connection cable (29) on the other side.

3. The valve control system according to claim 2, **characterized in that** said solenoid blow valves (13) are activated in sequence, according to a domino effect, upon the generation of a pulse by said electronic control unit (17), said pulse being received by the first (15a) of said remote control modules and being subsequently transferred in cascade, through said flexible connection cable (29), to the next remote control modules.

4. The valve control system according to claim 1, **characterized in that** said electronic control unit (17) emits a signal determining both the activation time interval of each of said solenoid blow valves (13) and the pause interval before the activation of the subsequent solenoid valve.
